# FASCICULE DE BREVET EUROPEEN

(11) **EP 2 829 326 B1**
(45) Date de publication et mention de la délivrance du brevet: **08.04.2020**
(21) Numéro de dépôt: 14173778.3
(22) Date de dépôt: 24.06.2014
(51) Int. Cl.: B02C 18/22

(54) **Broyeur de végétaux à trémie d'alimentation asymétrique**
Pflanzenhäcksler mit asymmetrischem Zuführtrichter
Vegetable grinding device with asymmetrical feed hopper

(30) Priorité: 22.07.2013 FR 1357195
(43) Date de publication de la demande: 28.01.2015
(73) Titulaire: Bugnot, Michel, 52270 Roches-Bettaincourt (FR)
(72) Inventeur: Bugnot, Michel, 52270 Roches-Bettaincourt (FR)
(74) Mandataire: Lavialle, Bruno François Stéphane

(56) Documents cités:
- DE-A1- 1 642 677
- DE-C- 200 618
- US-A- 5 005 620
- US-A- 5 667 152

## Description

La présente invention concerne un broyeur de végétaux.

### ARRIERE PLAN DE L'INVENTION

On utilise de plus en plus des broyeurs de végétaux pour diminuer le volume de petits branchages résultant par exemple de la taille des haies. Ce sont en général de petits broyeurs qui présentent une ouverture d'alimentation (fenêtre de broyage) de largeur souvent plus petite que la longueur de certains des branchages qu'elle doit engloutir. Un broyeur de ce type selon le préambule de la revendication 1 est par exemple décrit dans le document DE 16 42 677 A1.

Il se produit donc un engorgement juste en amont de cette ouverture qui est obstruée par des branchages en travers et accumulés par le mécanisme d'alimentation du broyeur. Ce mécanisme comporte le plus souvent une trémie dont les parois latérales et supérieure convergent vers la fenêtre d'alimentation équipée d'un tapis d'entraînement inférieur et parfois d'un rouleau ou tapis supérieur pour aider à l'entraînement du produit au travers de la fenêtre de broyage.

La solution à ce problème requiert de pouvoir orienter des branchages longs de manière qu'ils atteignent la fenêtre de broyage par l'une de leurs extrémités. Les moyens à mettre en œuvre pour assurer cette orientation préalable sont à disposer en amont de cette fenêtre, dans la trémie. Comme il s'agit de petits broyeurs à puissance faible, ces moyens ne doivent pas être consommateurs de l'énergie installée, essentiellement consacrée au broyage et à l'évacuation du matériau réduit.

### OBJET DE L'INVENTION

C'est ainsi que l'invention propose un broyeur de végétaux comportant des moyens de broyage disposés derrière une ouverture formant la sortie d'une trémie d'alimentation pourvue d'un tapis inférieur d'entraînement et d'une paroi supérieure convergeant vers le tapis au niveau de l'ouverture, caractérisé en ce que, par rapport à un axe longitudinal médian du broyeur, l'axe du tapis inférieur et l'ouverture susdite sont latéralement décalés, les parois latérales de la trémie convergeant vers l'ouverture de manière asymétrique par rapport à l'axe du tapis inférieur au moins dans le voisinage de cette ouverture.

Les branchages chargés à l'entrée de la trémie sont entraînés par le tapis inférieur en direction de la fenêtre dans une zone de ces derniers qui n'est pas médiane mais plutôt du côté de la paroi latérale qui converge vers l'axe du tapis sous l'incidence la plus faible. Les branchages ont donc tendance à être plus freinés par la paroi latérale opposée ce qui provoque leur rotation avant d'atteindre la fenêtre si bien que tout branchage transversal au tapis se trouve réorienté lors de son entraînement et pénètre dans la fenêtre par son extrémité voisine de la paroi la moins incidente. Il ne se produit donc pas de blocage de branchages transversaux plus longs que la largeur de la fenêtre.

### BREVE DESCRIPTION DES DESSINS

Il sera fait référence aux dessins annexés dans lesquels :

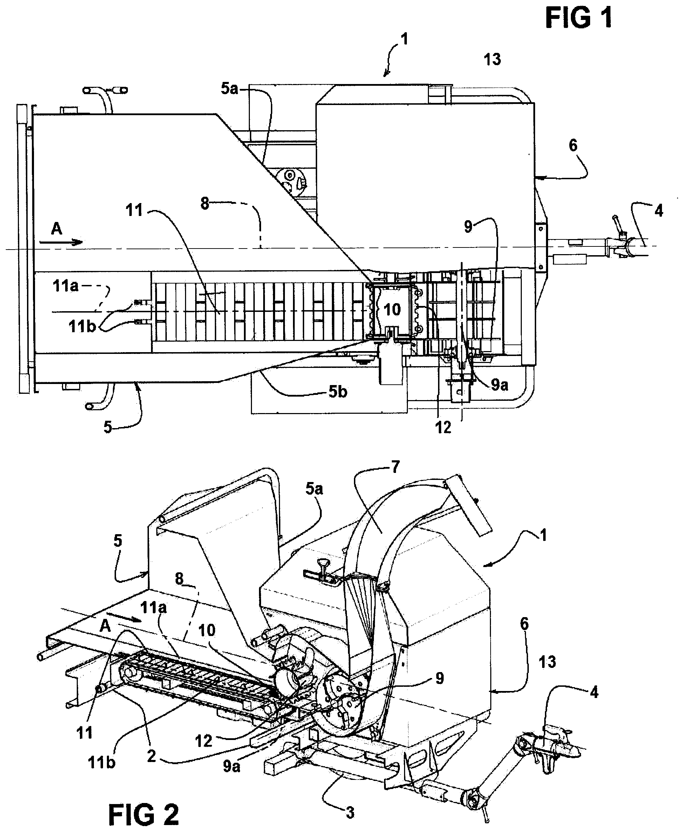

- la figure 1 est une vue de dessus simplifiée et partiellement écorchée d'un broyeur conforme à l'invention,
- la figure 2 illustre par une vue en perspective et en coupe selon le plan II-II de la figure 1 le broyeur selon l'invention.

### DESCRIPTION DETAILLEE DE L'INVENTION

Sur les figures, le broyeur 1 représenté comporte un châssis 2 inférieur équipé de moyens de roulement au sol 3 et vers l'avant dans un sens A de déplacement, de moyens d'attelage de ce châssis à un véhicule tracteur (un véhicule automobile par exemple).

Le châssis 1 porte à l'arrière une trémie 5 de réception des branchages à réduire et à l'avant, une unité de broyage 6 qui comprend une goulotte 7 d'évacuation du produit de broyage. L'ensemble possède un axe médian longitudinal 8 qui, dans le cas d'espèce, est perpendiculaire à l'axe de rotation 9a du rotor de broyage 9. Ce dernier se trouve derrière une ouverture 10 d'alimentation. Dans le cas des figures, les bords inférieurs et supérieurs de cette ouverture sont matérialisés par d'une part, l'extrémité d'enfournement d'un tapis d'entraînement 11 qui appartient à la paroi inférieure de la trémie et d'autre part, un rouleau (ou tapis) d'entraînement 12 du produit surplombant ladite extrémité du tapis inférieur.

Ce n'est pas sortir du cadre de l'invention que de prévoir des moyens de broyage différents d'un rotor. On peut en effet employer un broyeur à disque, à fléaux ou autre. Dans ce cas, l'axe 8 médian du broyeur sera défini comme parallèle à la direction générale A de transfert du produit à l'intérieur de la trémie, c'est-à-dire parallèle au tapis 11.

Selon l'invention, l'axe 11a médian du tapis 11 et l'ouverture 10 sont décalés par rapport à l'axe médian 8 du broyeur. On notera que les éléments moteurs du broyeur qui animent le rotor de broyage 9, le tapis d'amenée 11 et le rouleau 12 ainsi que les organes de transmission qui les relient sont logés sous un capotage 13 qui s'étend en avant de la trémie, dans l'espace libéré par le décalage décrit ci-dessus. Dans une variante de réalisation du broyeur, les moyens moteurs d'entraînement des organes actifs peuvent se résumer à une chaîne de transmission reliée à la prise de force d'un tracteur.

Selon une autre caractéristique de l'invention, les parois latérales 5a et 5b de la trémie, ici dans leur partie voisine de l'ouverture 10, sont convergentes de manière asymétrique vers cette ouverture par rapport à l'axe 11a du tapis d'amenée 11. En d'autres termes, la paroi 5a possède une incidence sur l'axe 11a plus prononcée que la paroi 5b.

On notera que dans le cas des figures, la partie arrière de la trémie est centrés sur l'axe médian 8 du broyeur c'est-à-dire que les parois latérales sont, dans cette partie, parallèles et équidistantes de l'axe 8. C'est dans cette partie que les branchages sont déposés pour être ensuite entrainés par le tapis inférieur 11, grâce notamment aux dents 11b dont il est équipé.

On comprend que tout banchage sensiblement transversal au tapis 11 est entraîné plutôt au voisinage de son extrémité voisine de la paroi 5b alors que son extrémité opposée est freinée par la paroi 5a plus "convergente" que l'autre, ce qui provoque une réorientation du branchage et conduit à ce que ce dernier traverse la fenêtre 10 par cette extrémité voisine de la paroi 5b. On évite ainsi l'obstruction de la fenêtre par des branchages transversaux et l'arrêt du broyeur pour éliminer le bourrage.

Dans une variante de l'invention, la paroi 5b peut-être quasiment parallèle au tapis 11.

La géométrie générale asymétrique de l'ensemble de broyage selon, l'invention est une solution simple et économique au problème du bourrage des broyeurs de faible capacité destiné à la réduction des déchets d'élagages ou ébranchages légers ou de taillage de haies.

Bien entendu, l'invention n'est pas limitée au mode de réalisation décrit mais englobe toute variante entrant dans le champ de l'invention tel que définie par les revendications.

## Revendications

1. Broyeur (1) de végétaux comportant des moyens (9) de broyage disposés derrière une ouverture (10) formant la sortie d'une trémie (5) d'alimentation pourvue d'un tapis inférieur (11) d'entraînement et d'une paroi supérieure convergeant vers le tapis (11) au niveau de l'ouverture (10), **caractérisé en ce que**, par rapport à un axe médian (8) longitudinal (A) du broyeur, l'axe (11a) du tapis inférieur (11) et l'ouverture (10) susdite sont latéralement décalés, les parois latérales (5a,5b) de la trémie (5) convergeant vers l'ouverture (10) de manière asymétrique par rapport à l'axe (11a) du tapis inférieur au moins dans le voisinage de cette ouverture (10).

## Patentansprüche

1. Pflanzenhäcksler (1), umfassend Häckselmittel (9), die hinter einer Öffnung (10) angeordnet sind, die den Auslass eines Beschickungstrichters (5) bildet, der mit einem unteren Antriebsförderband und einer oberen Wand versehen ist, die im Bereich der Öffnung zum Förderband (11) konvergiert, **dadurch gekennzeichnet, dass** in Bezug auf eine Längs-(A)-Mittelachse (8) des Häckslers die Achse (11a) des unteren Förderbandes (11) und die oben genannte Öffnung (10) seitlich versetzt sind, wobei die Seitenwände (5a, 5b) des Trichters (5) zur Öffnung (10) auf asymmetrische Weise in Bezug auf die Achse (11a) des unteren Förderbandes zumindest in der Nähe dieser Öffnung (10) konvergieren.

## Claims

1. A plant grinder (1) comprising grinder means (9) located behind an opening (10) forming the outlet of a feed hopper (5) provided with a bottom drive belt (11) and a top wall converging towards the belt (11) at the opening (10), the grinder being **characterized in that**, relative to a longitudinal middle axis (8, A) of the grinder, the axis (11a) of the bottom belt (11) and the above-mentioned opening (10) are offset laterally, the side walls (5a, 5b) of the hopper (5) converging towards the opening (10) in a manner that is asymmetrical relative to the axis (11a) of the bottom belt, at least in the vicinity of said opening (10).
